# EUROPÄISCHE PATENTANMELDUNG

(11) **EP 0 561 457 A2**
(43) Veröffentlichungstag der Anmeldung: **22.09.1993**
(21) Anmeldenummer: 93200713.1
(22) Anmeldetag: 11.03.1993
(51) Int. Cl.: G06F 9/30

(54) **Mikroprozessor zur Verarbeitung von Eingabe/Ausgabedaten**

(30) Priorität: 17.03.1992 DE 4208459
(71) Anmelder: Philips Patentverwaltung GmbH, 22335 Hamburg (DE); Philips Electronics N.V., 5621 BA Eindhoven (NL)
(72) Erfinder: Hardewig, Clemens, W-2000 Hamburg 1 (DE); Zeidler, Hans Christoph, W-2000 Hamburg 1 (DE)
(74) Vertreter: Poddig, Dieter, Dipl.-Ing.

(57) **Zusammenfassung**

Bei Prozessoren mit reduziertem Instruktionssatz werden die Operanden aus Registern bzw. als direkt angegebene Zahl einem Teil des Befehlswortes entnommen und das Operationsergebnis in einem Register abgespeichert, so daß die Verarbeitung in einem Taktzyklus erfolgen kann. Bei Verarbeitung von Eingabe/Ausgabedaten von peripheren Geräten entsteht jedoch ein Zeitverlust, da diese Werte zunächst aus dem Hauptspeicher in die entsprechenden Register übertragen werden müssen. Eine Beschleunigung ist dadurch möglich, daß zusätzliche Register vorgesehen werden, die Eingabe/Ausgabedaten direkt mit den entsprechenden Peripheriegeräten austauschen und die andererseits direkt mit der ALU verbindbar sind. Um diese zusätzliche Eingabe/Ausgaberegister adressieren zu können, werden im Befehlswort zusätzliche Bits als Adressenerweiterung verwendet, die zwischen Registern gleicher Adresse in den beiden Registersätzen umschalten. Diese Adressenerweiterungen liegen vorzugsweise an Bitplätzen im Befehlswort, die zumindest zum Teil nicht ausgewertet werden, wie dies beispielsweise bei Befehlen für SPARC-Prozessoren der Fall ist, wenn der zweite Operand durch ein Register angegeben wird. Damit wird eine kompatible Erweiterung für eine schnellere Verarbeitung von Eingabe/Ausgabedaten möglich. Durch Verwendung eines weiteren Bitplatzes als Steuerbit ist es möglich, auch bei der Erweiterung direkte Zahlen im Befehlswort als Operanden anzugeben.

## Beschreibung

Die Erfindung betrifft einen Mikroprozessor zur Verarbeitung von Eingabe/Ausgabedaten mit einer Anzahl erster Register, in denen Operanden enthalten sind und die über Adressen an ersten Bitplätzen in Befehlswörtern adressierbar und mit prozessorinternen Datenwegen verbindbar sind, um die Operanden mit wenigstens einer ALU oder über eine Schnittstellenschaltung mit insbesondere externen Datenwegen auszutauschen.

Derartige Microprozessoren sind allgemein bekannt und können bezüglich ihres Aufbaues, der sich insbesondere in der Struktur und dem Umfang der unterschiedlichen Befehlswörter äußert, im wesentlichen in zwei Klassen eingeteilt werden, nämlich in Microprozessoren mit einem umfangreichen und komplexen Befehlssatz und in Microprozessoren mit einem reduzierten Befehlssatz. Zu den letzteren gehört die Gruppe der sogenannten SPARC-Prozessoren, die nur eine besonders kurze Ausführungszeit für den überwiegenden Teil der einzelnen Befehle benötigen. Dies beruht u.a. darauf, daß die Verarbeitung von Operanden bei einer bestimmten Klasse von Befehlen nur aus Registern eines allgemeinen Registersatzes erfolgt, die über Adressen im Befehlswort adressiert werden, wodurch die Operanden sofort, d.h. innerhalb eines Taktzyklus, zur Verfügung stehen.

Ein gewisses Problem bei solchen Prozessoren stellt die Verarbeitung von Eingabedaten und Ausgabedaten für periphere Geräte dar. Häufig werden solche Eingabe/Ausgabedaten durch eine besondere Steueranordnung direkt in den Hauptspeicher des Prozessors eingeschrieben bzw. daraus ausgelesen, oder es werden gesonderte Eingabe/Ausgaberegister verwendet, die im Prozessor über einen allgemeinen Datenbus Daten mit beispielsweise dem Hauptspeicher oder anderen Registern austauschen können. Wenn ein Datenwort eines peripheren Gerätes in der internen arithmetisch-logischen Verarbeitungsanordnung verarbeitet werden soll, muß es zunächst in ein Register des allgemeinen Registersatzes übertragen werden, wodurch Zeit verloren geht. Dies wirkt sich besonders stark dann aus, wenn eine große Anzahl von Eingabe/Ausgabedaten verarbeitet werden soll.

Es ist ein Signalprozessor bekannt (PDµPD7720 der Firma NEC), bei dem in einem Befehl zwei Register adressiert werden können, von denen wenigstens eines ein direktes Eingabe/Ausgaberegister zum unmittelbaren Datenaustausch mit peripheren Geräten sein kann. Ein solches Register kann aber nicht für allgemeine Zwecke verwendet werden, und da einem solchen Register eine Registeradresse fest zugeordnet ist, können bei einer gegebenen Adressenlänge entsprechend weniger allgemeine Register verwendet werden.

Aufgabe der Erfindung ist es, einen Prozessor der eingangs genannten Art anzugeben, mit dem Ein/Ausgabedaten besonders schnell verarbeitet werden können, ohne daß die Anzahl allgemein verwendbarer Register bei vorgegebener Adressenlänge für diese Register verringert wird.

Diese Aufgabe wird erfindungsgemäß dadurch gelöst, daß bei Verwendung einer Anzahl zweiter Register, die die Eingabe/Ausgabedaten direkt mit Peripheriegeräten austauschen, die zweiten Register über dieselben Adressen im Befehlswort wie für die ersten Register ansteuerbar und mit den internen Datenwegen verbindbar sind und die Auswahl zwischen ersten und zweiten Registern gleicher Adresse über Bits an zweiten Bitplätzen der Befehlswörter erfolgt, wobei die zweiten Bitplätze zu einem Bereich gehören, der für diese Befehlswörter zumindest nur bedingt ausgewertet wird.

Die zweiten Register stellen somit eine lineare Erweiterung der ersten Register dar, auf die mit im wesentlichen denselben Adressen zugegriffen wird, die lediglich um Bits an den zweiten Bitplätzen erweitert sind, um zwischen den beiden Registern zu unterscheiden. Auf diese Weise sind die Eingabe/Ausgabedaten unmittelbar für die Verarbeitung zugänglich, ohne daß es dafür besonderer Speicherzugriffe im Hauptspeicher bedarf. Der Bereich des Befehlswortes, in dem die zweiten Bitplätze liegen, ist insbesondere bei den eingangs erwähnten SPARC-Prozessoren der Teil des Befehlswortes, der nicht ausgewertet wird, wenn der zweite Operand in einem Register enthalten ist. Auf diese Weise wird nämlich eine wichtige Forderung erfüllt, nämlich daß durch die Aufnahme der zweiten Register und deren Adressierung weiterhin die Möglichkeit besteht, bisherige Programme, die ohne die zweiten Register arbeiten, zu verwenden. Dabei müssen dann natürlich die Eingabe/Ausgabedaten auf andere Weise, beispielsweise über den Hauptspeicher, mit größerem Zeitaufwand verarbeitet werden.

Die Steuerung der Auswahl der Register kann auf verschiedene Weise erfolgen. Insbesondere bei Prozessoren mit reduziertem Befehlssatz, wobei zumindest ein Teil der Befehlswörter jeweils Adressen von mehreren Registern zur Angabe mehrerer Operanden enthält, die über getrennte interne Datenwege einer arithmetisch-logischen Verarbeitungseinheit zuführbar bzw. entnehmbar sind, ist es nach einer Ausgestaltung der Erfindung zweckmäßig, daß für jede Adresse ein gesonderter zweiter Bitplatz vorgesehen ist und der Bitwert an jedem zweiten Bitplatz ein Steuersignal erzeugt, das einen mit dem betreffenden internen Datenweg für den zugehörigen Operanden verbundenen Schalter ansteuert, der diesen Datenweg mit einem ersten oder einem zweiten adressierten Register verbindet. Da somit jeder Adresse eindeutig ein bestimmter Bitplatz zugeordnet ist, um zwischen den beiden Registersätzen umzuschalten, ist keine Decodierung der Adreßerweiterung notwendig, sondern die Bitwerte an diesen Bitplätzen können direkt zur Adreßerweiterung verwendet werden, indem die davon abgeleiteten Steuersignale unmittelbar Umschalter steuern, die Datenwege zwischen den beiden Registersätzen umschalten. Damit ist gewährleistet, daß die Verarbeitung eines Datenwortes von Eingabe/Ausgabedaten wirklich innerhalb eines Taktzyklus durchgeführt werden kann.

Bei vielen Prozessoren kann einer der Operanden durch eine Adresse im Befehlswort für ein Register, in dem dieser Operand enthalten ist, oder durch eine im Befehl direkt enthaltene Zahl angegeben werden, wobei zwischen diesen beiden Möglichkeiten durch den Wert eines Bits an einem bestimmten Bitplatz im Befehlswort unterschieden wird. Wenn nun einzelne Stellen des Bereichs im Befehlswort, an dem eine direkt zu verarbeitende Zahl angegeben wird, für die Adreßerweiterung zur Adressierung der zweiten Register verwendet wird, kann bei erweiterten Adressen nicht ohne weiteres eine Zahl als Operand direkt angegeben werden. Um jedoch auch bei dem erweiterten Registersatz Zahlen als direkte Operanden angeben zu können, ist bei Prozessoren, bei denen der eine Wert eines Bits an einem dritten Bitplatz der Befehlswörter angibt, daß einer der Operanden durch eine im Befehlswort direkt angegebene Zahl gebildet ist, und der andere Wert dieses Bits angibt, daß der Operand durch den Inhalt eines Registers gebildet ist, eine weitere Ausgestaltung der Erfindung dadurch gekennzeichnet, daß der Bitwert an dem Bitplatz höchster Wertigkeit der direkten Zahl beim anderen Wert des Bits am dritten Bitplatz angibt, daß anstelle eines Registers der Operand durch eine direkte Zahl mit geringerer Stellenzahl im Befehlswort angegeben ist, und daß die zweiten Bitplätze für die Auswahl der Register die Stellen nächstniedrigerer Wertigkeit der direkten Zahl sind. Bei einem erweiterten Registersatz wird auf diese Weise also durch zwei Bit im Befehlswort angegeben, ob einer der Operanden durch eine Registeradresse oder direkt durch eine Zahl im Befehl als Operand angegeben wird. Der dabei angebbare Zahlenbereich ist zwar geringer als ohne Erweiterung der Adressierung für den erweiterten Registersatz, jedoch für die meisten praktischen Fälle völlig ausreichend.

Ausführungsbeispiele der Erfindung werden nachstehend näher anhand der Zeichnung erläutert. Es zeigen
Fig. 1a) und 1b) den Aufbau zweier Befehlswörter für einen bekannten Microprozessor vom SPARC-Typ,
Fig. 2a) und 2b) zwei Befehlswörter mit erweiterter Adressierung für einen erweiterten Registersatz,
Fig. 3 schematisch die wichtigsten Elemente eines Prozessors mit erweitertem Registersatz.

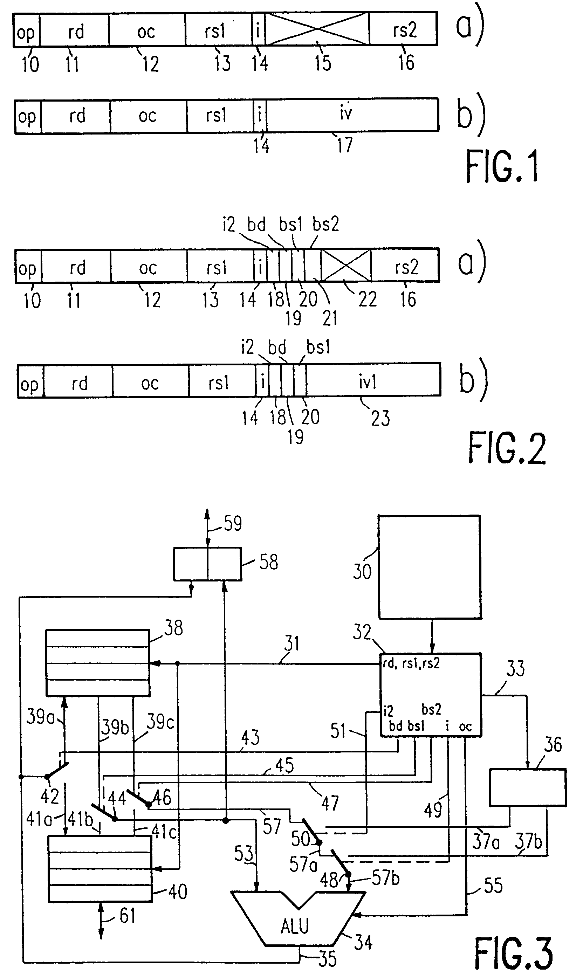

In Fig. 1a) ist ein Befehlswort angedeutet, das aus einer Anzahl von Teilen aufgebaut ist. Der Teil 10 enthält eine Angabe op, die zwischen verschiedenen Klassen von Befehlen unterscheidet. Der Teil 11 enthält die Adresse rd eines Registers, das ein Zielregister darstellt, in das das Ergebnis der durch diesen Befehl angegebene Operation abgelegt werden soll. Der Teil 12 enthält den Operationscode, der also die Operation im einzelnen angibt, die mit diesem Befehlswort durchgeführt werden soll. Der Teil 13 enthält die Angabe eines Registers rs1, das die Quelle für einen ersten zu verarbeitenden Operanden darstellt.

Der Teil 14 umfaßt einen Bitplatz, und durch den Wert des Bits i wird angegeben, ob in den nachfolgenden Teilen des Befehlswortes ein zweiter Operand durch eine Registeradresse oder durch diesen Operanden selbst angegeben wird. Bei dem Befehlswort in Fig. 1a) wird angenommen, daß i = 0 ist und daß damit der zweite Operand durch eine Registeradresse rs2 angegeben ist. Der Teil 15 wird dann nicht ausgewertet, enthält jedoch üblicherweise Bits mit dem Wert 0.

Das in Fig. 1b) dargestellte Befehlswort ist im wesentlichen gleich aufgebaut und unterscheidet sich lediglich darin, daß in dem Teil 17, der auf den Bitplatz 14 folgt, ein Operand direkt als Zahl iv angegeben ist, wobei i = 1 ist.

Es handelt sich bei den in Fig. 1 dargestellten Befehlswörtern also um Drei-Adreß-Befehlswörter, wie sie bei SPARC-Prozessoren verwendet werden, die eine besonders schnelle Verarbeitung ermöglichen. Die drei Registeradressen rd, rs1 und rs2 umfassen je fünf Bit, so daß damit 32 Register adressiert werden können. Die Zahl iv umfaßt 13 Stellen, so daß der Bereich 15, der bei Angabe der Registeradresse rs2 als zweiter Operand nicht ausgewertet wird, acht Bit umfaßt. Bei diesen Befehlen werden die Operanden, die sich auf Peripheriegeräte beziehen, vorher in die entsprechenden Register von den Eingabe/Ausgaberegistern geladen bzw. nach der Befehlsausführung in die Eingabe/Ausgaberegister übertragen.

Eine Beschleunigung der Verarbeitung kann erreicht werden, wenn die Daten externer Peripheriegeräte direkt mit Registern ausgetauscht werden können, die auch für die interne Verarbeitung direkt zugreifbar sind. Da die Anzahl der allgemeinen Register, die durch die Adressen rd, rs1 und rs2 adressiert werden, nicht verringert werden soll, muß dieser Registersatz um zusätzliche Eingabe/Ausgaberegister erweitert werden, die direkt Daten von Peripheriegeräten aufnehmen bzw. dorthin abgeben. Für die interne Verarbeitung des Inhalts dieser Register muß die Adressierung der Register jedoch erweitert werden.

Eine solche Erweiterung ist bei den Befehlswörtern vorgenommen, die in Fig. 2 dargestellt sind. Die Teile 10 bis 14 entsprechen den gleichbezeichneten Teilen der Befehlswörter in Fig. 1, wie auch aus den Bezeichnungen darin zu ersehen ist. Der Wert des Bits i an dem Bitplatz 14 sei i = 0, was zunächst bedeutet, daß der zweite Operand durch eine Registeradresse rs2 im Teil 16 angegeben wird. Um nun alle drei Adressen rd, rs1 und rs2 wahlweise auf die allgemeinen Register oder auf die Eingabe/Ausgaberegister beziehen zu können, sind Bitplätze 19, 20 und 21 vorgesehen, wobei der Wert des Bits bd am Bitplatz 19 angibt, ob die Adresse rd sich auf ein allgemeines Register oder auf ein Eingabe/Ausgaberegister bezieht, der Wert des Bits bs1 an der Bitstelle 20 bestimmt, auf welchen der beiden Registersätze sich die Adresse rs1 bezieht, und der Wert des Bits bs2 an dem Bitplatz 21 bestimmt, auf welchen Registersatz sich die Adresse rs2 bezieht. Die Bits im Bereich 22, die nun noch zwischen dem Bitplatz 21 und dem Teil 16 im Befehlswort übrig bleiben, werden nicht ausgewertet. Die Bedeutung des Bits i2 am Bitplatz 18 wird weiter unten erläutert.

Durch das in Fig. 2a) dargestellte Befehlswort ist es nun also möglich, jedem der drei Operanden ein allgemeines Register oder ein Eingabe/Ausgaberegister zuzuordnen, und zwar in beliebiger Kombination. Dies ermöglicht eine sehr flexible Verarbeitung von Eingabe/Ausgabedaten.

Wenn der zweite Operand als direkte Zahl iv im Befehl angegeben werden soll, ist bei voller Stellenzahl für diese Zahl iv kein Platz für die zusätzlichen Bits zur Umschaltung der Registersätze. Um jedoch auch in diesem Fall, d.h. bei einer direkten Zahl als zweiten Operand, zwischen beiden Registersätzen umschalten zu können, wird die Stellenzahl der direkten Zahl verringert und ein Bitplatz 18 für ein Bit i2 vorgesehen, dessen Wert angibt, ob der zweite Operand durch eine Registeradresse rs2 oder durch eine direkte verkürzte Zahl angegeben wird, wenn das Bit i = 0 ist. Der Fall, daß beim Wert des Bits i = 1 eine direkte, unverkürzte Zahl als zweiter Operand angegeben ist ohne die Möglichkeit, für die anderen beiden Operanden die Registersätze umschalten zu können, bleibt erhalten. Bei dem in Fig. 2a) angegebenen Befehlswort sei nun angenommen, daß i = 0 und i2 = 0 sind. Wenn jedoch an dem Bitplatz 18 das Bit i2 = 1 ist, soll der zweite Operand durch eine Zahl direkt im Befehlswort angegeben werden. In diesem Falle ist jedoch das Bit bs2 am Bitplatz 21 nicht erforderlich, da nun keine Registeradresse rs2 für den zweiten Operanden angegeben wird. Auf diese Weise ergibt sich nun das Format des Befehlswortes, wie es in Fig. 2b) angegeben ist. Der Bitplatz 21 in Fig. 2a) ist hier nun die höchste Stelle des direkt im Befehlswort angegebenen zweiten Operanden iv1 im Bereich 23, was durch Verknüpfung der Bitwerte i und i2 an den Bitplätzen 14 und 18 eindeutig bestimmbar ist. Lediglich für die Registeradressen rd und rs1 sind noch die Umschaltbits bd und bs1 an den Bitplätzen 19 und 20 vorhanden. Die Stellenzahl der direkt angegebenen Zahl iv1 ist somit nur um drei Stellen niedriger als die direkt angegebene Zahl iv im Befehlswort nach Fig. 1b). Auf diese Weise kann ein Prozessor mit erweitertem Registersatz und erweiterter Logik zur Verarbeitung der Befehlswörter gemäß Fig. 2 auch eindeutig und korrekt die Befehlswörter gemäß Fig. 1 verarbeiten, wobei dann automatisch nur der allgemeine Registersatz verwendet wird.

Der Aufbau der wichtigsten Teile eines Prozessors zur Verarbeitung der Befehlswörter nach Fig. 2 ist schematisch in Fig. 3 dargestellt. Aus einem Programmspeicher 30 werden aufeinanderfolgend Befehle eines Programms ausgelesen und einem Befehlsdecoder 32 zugeführt. Der Befehlsspeicher 30 ist beispielsweise ein Teil eines Hauptspeichers, und die Verbindung zum Befehlsdecoder 32 ist hier nur vereinfacht als direkte Verbindung dargestellt. Tatsächlich verläuft die Verbindung über einen der internen Datenwege, wie später erläutert wird. Wenn aus dem Programmspeicher 30 ein Befehlswort gemäß Fig. 2 ausgelesen wird, gibt der Decoder über die Verbindung 31 die Adressen rd, rs1 und ggf. rs2 der Register in den Registersätzen 38 oder 40 aus, aus denen die zu verarbeitenden Operanden ausgelesen werden oder in die das Verarbeitungsergebnis einzuschreiben ist. Die Verbindung 31 ist hier nur als einfache Linie gezeichnet, besteht tatsächlich jedoch aus einer Anzahl paralleler Leitungen für jedes Bit jeder der Adressen. Dies gilt entsprechend auch für die anderen Datenverbindungen in Fig. 3.

In den Registersätzen 38 und 40 können jeweils bis zu drei Register gleichzeitig adressiert werden, wobei eines dieser Register über einen Eingang 39a bzw. 41a zugeführte Operanden aufnimmt und eines oder zwei Register Operanden über die Ausgänge 39b und 39c bzw. 41b und 41c abgeben. Dabei ist der Registersatz 38 der allgemeine Registersatz, während der Registersatz 40 die Eingabe/Ausgaberegister enthhält, die über die Verbindung 61 direkt Daten von Peripheriegeräten empfangen bzw. an diese abgeben.

Der Befehlsdecoder 32 wertet die Bits an den Bitplätzen 14 und 18 aus, und wenn i = 1 ist, wird der Teil 17 des Befehlswortes über eine Verbindung 33 einem Register 36 zugeführt, und wenn i = 0 und i2 = 1 ist, wird der Teil 23 mit entsprechend geringerer Stellenzahl dem Register 36 zugeführt.

Die Verarbeitung der Operanden erfolgt in der arithmetisch-logischen Einheit ALU 34, die über die Eingänge 53 und 57b zwei Operanden empfängt und am Ausgang 35 das Verarbeitungsergebnis abgibt. Die Funktion der ALU34 wird über die Verbindung 55 vom Befehlsdecoder 32 gesteuert, der den Instruktionscode im Teil 12 des Befehls entschlüsselt.

Ferner leitet der Befehlsdecoder 32 aus den Bitwerten an den Bitplätzen 19, 20 und 21 Steuersignale ab, die über Steuerleitungen 43, 45 und 47 Umschaltern 42, 44 und 46 zugeführt werden. Wenn die Bits an den Bitplätzen 19, 20 und 21 den Wert 0 haben, weil entweder ein Befehl gemäß Fig. 1a) verarbeitet wird, bei dem der nicht ausgewertete Bereich 15 nur Bits mit dem Wert 0 enthält, oder wenn ein Befehl gemäß Fig. 2 vorliegt, bei dem alle Operanden nur dem allgemeinen Registersatz 38 entnommen bzw. zugeführt werden, liegen die Umschalter 42, 44 und 46 in der dargestellten oberen Stellung, so daß die Datenwege 35, 53 und 57 alle mit dem allgemeinen Registersatz 38 verbunden sind. Wenn jedoch an einem der Bitplätze 19, 20 oder 21 ein Bit mit dem Wert 1 enthalten ist, wird der entsprechende Umschalter 42, 44 oder 46 umgeschaltet und der entsprechende Datenweg 35, 53 oder 57 mit dem Registersatz 40 verbunden.

Der Datenweg 53 führt von dem Umschalter 44 direkt auf einen Eingang der ALU 34 sowie auf einen Datenbus-Puffer 58, der an einen externen Datenbus 59 angeschlossen ist und über diesen Datenwörter aus einem der beiden Registersätze 38 oder 40, abhängig von der Stellung des Umschalters 44, beispielsweise an einen Hauptspeicher sendet. Entsprechend führt der Datenweg 35 ebenfalls auf den Daten-Puffer 58, der auf dem Datenbus 59 ankommende Datenwörter einem der beiden Registersätze 38 oder 40, abhängig von der Stellung des Umschalters 42, zuführt. Auf diese Weise können Register aus beiden Registersätzen 38 und 40 wahlweise über den externen Datenbus 59 Daten übertragen bzw. empfangen. Über diesen externen Datenbus 59 laufen auch tatsächlich die Befehle vom Programmspeicher 30 zum Befehlsdecoder 32, wobei letzerer eingangsseitig entsprechend angeschlossen werden muß.

Der Datenweg 57 führt von dem Umschalter 46 jedoch auf einen weiteren Umschalter 50, der über die Steuerleitung 51 von dem Befehlsdecoder 32 abhängig von dem Wert des Bits i2 am Bitplatz 18 gesteuert wird. Bei i2 = 0 liegt der Umschalter 50 in der dargestellten linken Stellung, so daß der zweite Operand über den Datenweg 57, den Umschalter 50, die Verbindung 57a und den Umschalter 48 und über die Verbindung 57b auf den anderen Eingang der ALU34 gelangt. Wenn dagegen i2 = 1 ist, soll eine direkte Zahl iv1 des Befehls gemäß Fig. 2b) als zweiter Operand verarbeitet werden, wobei für die anderen beiden Operanden die Registersätze 38 und 40 umschaltbar bleiben, und dann wird der Umschalter 50 über die Steuerleitung 51 umgeschaltet und verbindet nun einen Ausgang 37b mit geringerer Stellenzahl des Registers 36 über die Verbindung 57a, den Umschalter 48 und die Verbindung 57b mit dem anderen Eingang der ALU 34. Die höchste Stelle dieser Zahl, die dem Bitplatz 21 im Befehl gemäß Fig. 2a) entspricht, kann dabei den Umschalter 46 steuern, da dessen Stellung in diesem Falle nicht von Bedeutung ist.

Wenn jedoch das Bit i = 1 ist, wird über die Steuerleitung 49 der Umschalter 48 umgeschaltet, so daß nun aus dem Register 36 über einen Ausgang 37a der direkte Wert mit voller Stellenzahl über die Verbindung 57b der ALU 34 zugeführt wird, entsprechend dem in Fig. 1b) dargestellten Befehlswort.

Auf diese Weise wird in jedem Falle, d.h. bei Befehlswörtern ohne Registererweiterung gemäß Fig. 1 oder bei Befehlswörtern mit Registererweiterung gemäß Fig. 2 stets der ALU 34 am betreffenden Eingang der richtige Operand zugeführt bzw. das Operationsergebnis im richtigen Register abgespeichert.

## Patentansprüche

1. Mikroprozessor zur Verarbeitung von Eingabe/Ausgabedaten mit einer Anzahl erster Register, in denen Operanden enthalten sind und die über Adressen an ersten Bitplätzen in Befehlswörtern adressierbar und mit prozessorinternen Datenwegen verbindbar sind, um die Operanden mit wenigstens einer ALU oder über eine Schnittstellenschaltung mit insbesondere externen Datenwegen auszutauschen,
dadurch gekennzeichnet, daß bei Verwendung einer Anzahl zweiter Register (40), die die Eingabe/Ausgabedaten direkt mit Peripheriegeräten austauschen, die zweiten Register (40) über dieselben Adressen im Befehlswort wie für die ersten Register (38) ansteuerbar und mit den internen Datenwegen (35, 53, 57) verbindbar sind und die Auswahl zwischen ersten und zweiten Registern (38, 40) gleicher Adresse über Bits an zweiten Bitplätzen (19, 20, 21) der Befehlswörter erfolgt, wobei die zweiten Bitplätze zu einem Bereich (15) gehören, der für diese Befehlswörter zumindest nur bedingt ausgewertet wird.

2. Mikroprozessor nach Anspruch 1, wobei zumindest ein Teil der Befehlswörter jeweils Adressen von mehreren Registern (38) zur Angabe mehrerer Operanden enthält, die über getrennte interne Datenwege (35, 53, 57) einer arithmetisch-logischen Verarbeitungseinheit zuführbar bzw. entnehmbar sind,
dadurch gekennzeichnet, daß für jede Adresse ein gesonderter zweiter Bitplatz (18, 19, 20) vorgesehen ist und der Bitwert an jedem zweiten Bitplatz ein Steuersignal (43, 45, 47) erzeugt, das einen mit dem betreffenden Datenweg (35, 53, 57) für den zugehörigen Operanden verbundenen Schalter (42, 44, 46) ansteuert, der diesen internen Datenweg (35, 53, 57) mit einem ersten oder einem zweiten adressierten Register (38, 40) verbindet.

3. Mikroprozessor nach Anspruch 2, wobei der eine Wert eines Bits an einem dritten Bitplatz (14) der Befehlswörter angibt, daß einer der Operanden durch eine im Befehlswort direkt angegebene Zahl (17) gebildet ist und der andere Wert dieses Bits angibt, daß der Operand durch den Inhalt eines Registers (38) gebildet ist,
dadurch gekennzeichnet, daß der Bitwert an dem Bitplatz (18) höchster Wertigkeit der direkten Zahl (17) beim anderen Wert des Bits am dritten Bitplatz angibt, daß anstelle eines Registers (38, 40) der Operand durch eine direkte Zahl (23) mit geringerer Stellenzahl im Befehlswort angegeben ist und daß die zweiten Bitplätze (19, 20, 21) für die Auswahl der Register (38, 40) die Stellen nächstniedrigerer Wertigkeit der direkten Zahl (17) sind.
